# EUROPÄISCHE PATENTSCHRIFT

(11) **EP 3 654 805 B1**
(45) Veröffentlichungstag und Bekanntmachung des Hinweises auf die Patenterteilung: **04.03.2026**
(21) Anmeldenummer: 18740189.8
(22) Anmeldetag: 10.07.2018
(51) Int. Cl.: A47D 5/00, A47D 15/00, A47B 88/50

(54) **WICKELABLAGE**
CHANGING STATION
TABLE À LANGER

(30) Priorität: 18.07.2017 DE 102017212269
(43) Veröffentlichungstag der Anmeldung: 27.05.2020
(73) Patentinhaber: Miniwim UG (Haftungsbeschränkt), 80997 München (DE)
(72) Erfinder: SCHLEICHER, Mark, 80997 München (DE)
(74) Vertreter: Lang, Johannes
(86) Internationale Anmeldenummer: PCT/EP2018/068700
(87) Internationale Veröffentlichungsnummer: WO 2019/016037

(56) Entgegenhaltungen:
- EP-A2- 1 504 696
- WO-A1-97/39661
- WO-A2-2007/135271
- DE-A1- 102006 016 921
- FR-A1- 2 841 113
- JP-U- S5 524 404
- US-A- 3 188 984

## Beschreibung

### 1. Technisches Gebiet:

Die Erfindung betrifft Ablagen zum Wickeln von Säuglingen oder Kleinkindern.

### 2. Stand der Technik:

Ablagen zum Wickeln von Säuglingen oder Kleinkindern werden in verschiedenen Formen verwendet, z.B. als Wickeltische, Wickelkommoden, Aufsätze für Wickeltische oder Wickelkommoden, oder andere Oberflächen zum Wickeln. Sie dienen dazu, Säuglinge in einer vertrauten Umgebung und in für die wickelnde Person angenehmer Höhe wickeln und versorgen zu können.

Der Sturz vom Wickeltisch ist einer der häufigsten Unfallgründe von Säuglingen. Absolute Unfallzahlen sind schwer zu finden, man geht jedoch davon aus, dass statistisch gesehen jedes zweite Kind in seinem Leben vom Wickeltisch fällt. Die Folgen sind oftmals permanent und schwerwiegend. In Schulungen wie Geburtsvorbereitungskursen und bei Kinderärzten ist das Problem bestens bekannt. Daher wird Eltern bei verschiedensten Gelegenheiten eindringlich dazu geraten, immer eine Hand am Kind zu haben, wenn es gewickelt wird, um einen Sturz zu vermeiden. Die auftretenden Unfallzahlen machen aber klar, dass dieser Rat in der Realität nur schwer einzuhalten ist. Oftmals treten unverhofft Ereignisse ein, die die Aufmerksamkeit der wickelnden Aufsichtsperson auf sich zieht, wenn sich beispielsweise das Geschwisterchen im Nebenraum verletzt hat oder der Postbote klingelt.

Die kritischste Phase ist zwischen dem vierten und sechsten Lebensmonat. In diesem Zeitraum beginnen sich Säuglinge in der Regel zu drehen und sich vorwärts zu bewegen. Die Eltern haben sich monatelang daran gewöhnt, dass sich ihr Kind nicht bewegt und haben daher in der Regel kein erhöhtes Alarmbewusstsein mehr beim Wickeln. Oftmals treten Stürze von Wickeltischen aber gerade dann auf, wenn sich der Säugling zum ersten Mal in seinem Leben dreht.

Die bereits vorhandenen Lösungen, Stürze zu verhindern, sind entweder unkomfortabel oder lösen das Problem nicht vollständig.

Wickeltische mit einer Gurtlösung sind in den USA besonders beliebt. Ein Wickeltisch mit Gurtlösung ist beispielsweise unter dem Namen "Solid Easymove" (http://www.heberhard.at/Wickeltisch-klappbar-Solid-Easymove-890300.html) bekannt geworden. Auch wenn der Gurt verhindert, dass das Kind vom Wickeltisch fällt, verhindert er auch ein komfortables Wickeln.

Einige Wickeltische weisen Barrieren auf, die eine Herabfallen des Kindes an der linken bzw. rechten Seite sowie der Rückseite verhindern. Die der wickelnden Aufsichtsperson zugewandte Seite bleibt bei diesen Wickeltischen jedoch frei. Ein Herunterfallen des Kindes über die Vorderseite, z.B. wenn die wickelnde Aufsichtsperson abgelenkt wird und sich vom Wickeltisch entfernt, verhindern diese Wickeltische nicht.

Einige Wickeltische haben auch Barrieren an der Vorderseite. Diese Barrieren sind dann jedoch in der Regel besonders niedrig, damit sie beim Wickeln nicht im Weg sind. Denn zu hohe Barrieren machen das Hineinlegen und das Herausholen des Säuglings aus der Ablage unkomfortabel. Eine solche Lösung ist zum Beispiel unter dem Namen "Ikea Gulliver" bekannt geworden. Diese Lösung verschiebt das beschriebene Sturzproblem jedoch nur in einen späteren Lebensmonat, in dem die Kinder dann diese kleine Barriere überwinden können.

WO 97/39661 A1 offenbart eine Vorrichtung zur Pflege eines Säuglings oder dergleichen, wobei das Risiko eines Sturzes des Säuglings ausgeschlossen ist, wenn sich der Benutzer vom Tisch entfernt. Diese Vorrichtung besteht aus mindestens zwei miteinander verbundenen starren Rahmen, die relativ zueinander beweglich sind. Der obere Rahmen bildet in angehobener Stellung einen starren Schutzgurt mit kontrollierter Selbstpositionierung, der sich zurückzieht, wenn der Benutzer eine Gegenkraft auf die erfindungsgemäße Steuervorrichtung ausübt. Diese Vorrichtung rastet automatisch ein, wenn sich der Benutzer vom Pflegetisch entfernt. In einer anderen Ausführungsform kann der obere Rahmen aus zwei oder mehr rechteckigen Rahmen bestehen, die am unteren Rahmen der Vorrichtung befestigt sind. Einer der rechteckigen Rahmen ist mit einem entsprechend geformten Stück aus geeignetem Material versehen, das den zweiten rechteckigen Rahmen führt und die beiden Rahmen gleichzeitig und symmetrisch nach unten klappt. Die Vorrichtung ist mit einem System zur Verriegelung der Rahmen in angehobener Position versehen. Die gesamte Einheit kann optional auf einem starren, klappbaren Untergestell befestigt werden, das hoch genug ist, um dem Benutzer ein Arbeiten im Stehen zu ermöglichen. Die Erfindung ist besonders nützlich für die Pflege von Neugeborenen und Säuglingen.

FR 2 772 577 offenbart eine Wickelablage mit einer beweglichen Barriere, die in einer Sicherungsposition ein Herabfallen des Kindes verhindern soll. Diese Wickelablage weist jedoch den Nachteil auf, dass die Barriere entweder über ein Pedal oder einen Drückknopf von einer Sicherungsposition in eine zum Wickeln geeignete Position gebracht werden muss. Gerade aufgrund der Tatsache, dass die wickelnde Person, die den Säugling auf die Ablage legen möchte, gleichzeitig durch Betätigen eines Drückknopfes oder eines Pedals eine Bewegung der Barriere auslösen muss, ist diese Wickelablage umständlich und die Aufmerksamkeit der wickelnden Person wird vom Säugling abgelenkt.

Ähnlich ist aus der FR 2 841 113 eine Wickelablage bekannt, bei der eine Barriere von der Aufsichtsperson über einen Hebel von einer aktiven Position in eine niedrige Position gebracht werden muss. Auch hier ist eine umständliche Bedienung durch Betätigung des Hebels nötig, die die Aufmerksamkeit der wickelnden Person vom Säugling ablenkt. Zudem ist der Aufbau der Wickelablage sehr komplex. Ähnlich komplexe Lösungen mit Pedalen, Hebeln oder Druckknöpfen sind aus der FR 2 803 732, WO 2007/135271 oder WO 97/39661 bekannt.

Es ist daher eine Aufgabe der vorliegenden Erfindung, die Bedienbarkeit und Sicherheit von Ablagen zum Wickeln zu verbessern.

### 3. Zusammenfassung der Erfindung:

Die Erfindung ist in den unabhängigen Ansprüchen definiert. Im Folgenden werden die Teile der Beschreibung und der Zeichnungen, die sich auf Aspekte beziehen, die nicht durch die Ansprüche abgedeckt sind, nicht als Aspekte der Erfindung dargestellt, sondern als Hintergrundwissen oder Beispiele, die für das Verständnis der Erfindung nützlich sind.

In einem Ausführungsbeispiel wird zumindest ein Aspekt der erfindungsgemäßen Problematik durch eine Ablage zum Wickeln eines Säuglings oder Kleinkinds gelöst, die eine bewegliche Barriere aufweist. Die Ablage weist eine Einrichtung zum automatischen Detektieren einer Aufsichtsperson auf, wobei die Einrichtung zum Detektieren so ausgestaltet ist, dass sie die bewegliche Barriere in einen geöffneten Zustand bringt, wenn die Einrichtung zum automatischen Detektieren eine Aufsichtsperson detektiert.

Die Ablage weist somit eine Barriere auf, die ein Herunterfallen des Säuglings bzw. des Kleinkinds sicher verhindern kann, wenn sich keine Aufsichtsperson (z.B. eine erwachsene Person, die den Säugling oder das Kleinkind wickelt) an der Ablage befindet. Sobald die Einrichtung zum Detektieren jedoch eine Aufsichtsperson detektiert, wird die Barriere geöffnet, so dass die Aufsichtsperson den Säugling oder das Kleinkind komfortabel auf der Ablage ablegen kann bzw. aus der Ablage entnehmen kann, ohne dass eine störende Barriere im Weg ist. Die Aufsichtsperson muss dabei keine aktive Bewegung ausführen, wie z.B. ein Pedal betätigen oder einen Knopf drücken. Vielmehr wird die Aufsichtsperson von der Ablage automatisch detektiert, sodass die Barriere geöffnet wird. Die Einrichtung zum Detektieren der Ablage ist eine Einrichtung zum passiven Detektieren (die Aufsichtsperson muss keine aktive Bewegung ausführen, wie z.B. ein Pedal betätigen oder einen Knopf drücken). Zum Beispiel kann die Einrichtung zum Detektieren automatisch detektieren, wenn die Aufsichtsperson sich an einer Vorderseite der Ablage platziert, die zum Zugriff auf die Ablage vorgesehen ist. Die Ablage kann somit eingerichtet sein, dass sie erkennt, wenn eine Aufsichtsperson vor der Ablage steht. Durch das automatische Detektieren der Aufsichtsperson und das anschließende Öffnen der Barriere macht sie ein komfortables Wickeln des Säuglings möglich. Die Aufsichtsperson muss sich nicht mit der Betätigung der Ablage durch Drücken von Knöpfen oder Betätigen von Hebeln beschäftigen, während sie den Säugling in der Hand trägt, sondern kann sich voll und ganz dem Säugling widmen.

Beispielsweise kann die Einrichtung zum Detektieren an einer Vorderseite der Ablage angeordnet sein und/oder automatisch detektieren, wenn sich eine Aufsichtsperson an der Vorderseite der Ablage platziert. Zum Beispiel kann die bewegliche Barriere ebenfalls an der Vorderseite der Ablage platziert sein, so dass bei geöffneter beweglicher Barriere komfortabel auf die Ablage zugegriffen werden kann. Zum Beispiel können an den übrigen Seiten der Ablage (z.B. Rückseite, linke Seite, rechte Seite) unbewegliche Barrieren angeordnet sein, so dass ein Herabfallen des Kindes von allen Seiten verhindert werden kann.

Die Ablage kann z.B. als ein Wickeltisch, eine Wickelkommode, als ein Aufsatz für einen Wickeltisch oder eine Wickelkommode ausgebildet sein. Der Aufsatz kann eine Oberfläche zum Wickeln aufweisen oder aber ohne eine solche Oberfläche ausgebildet sein. In einem Ausführungsbeispiel weist der Aufsatz eine bewegliche Barriere auf. Die Barriere ist zur Anordnung an einer Oberfläche des Wickeltisches oder der Wickelkommode zum Wickeln eines Säuglings oder Kleinkinds ausgestaltet. Die Barriere ist dazu ausgestaltet, um ein Herabfallen des Säuglings oder Kleinkinds von der Oberfläche zu verhindern. Der Aufsatz weist weiterhin eine Einrichtung zum automatischen Detektieren einer Aufsichtsperson auf. Die Einrichtung zum automatischen Detektieren ist so ausgestaltet, dass sie die bewegliche Barriere in einen geöffneten Zustand bringt, wenn die Einrichtung zum Detektieren eine Aufsichtsperson detektiert. Im Übrigen kann der Aufsatz weitere Merkmale aufweisen, wie allgemein in Bezug auf eine Ablage, Wickelkommode oder einen Wickeltisch beschrieben.

Die bewegliche Barriere kann eines oder mehrere formstabile Elemente, z.B. Brett, Stange, etc., und/oder eines oder mehrere flexible Elemente, z.B. Gewebe, Netz, etc. aufweisen. Die genannten Elemente können beweglich und/oder unbeweglich ausgebildet sein. Die bewegliche Barriere kann horizontal und/oder vertikal durchgehend oder diskontinuierlich (z.B. als Zinnen, Gitterstäbe etc.) ausgebildet sein. Entscheidend ist, dass die bewegliche Barriere so ausgestaltet ist, dass sie ein Herunterfallen des Säuglings über die Barriere im geschlossenen Zustand sicher verhindert und im geöffneten Zustand einen bequemen Zugriff auf die Ablage ermöglicht. Hierin beschriebene Eigenschaften eines beweglichen Elements können sich auch auf die bewegliche Barriere selbst beziehen.

Die Einrichtung zum Detektieren kann weiterhin so ausgestaltet sein, dass sie die bewegliche Barriere in einen geschlossenen Zustand bringt, wenn die Einrichtung zum Detektieren keine Aufsichtsperson detektiert. Wenn sich die Aufsichtsperson vom Wickeltisch entfernt, wird das Kind somit automatisch geschützt. Wiederum muss die Aufsichtsperson keine aktive Bewegung ausführen, um die Ablage zu sichern. Vielmehr detektiert die Einrichtung zum Detektieren automatisch, wenn sich die Aufsichtsperson von der Ablage entfernt. Es kann daher ausgeschlossen werden, dass ein unachtsames sich Entfernen der Aufsichtsperson zu einem Sturz des Säuglings von der Ablage führt. Sobald die Einrichtung zum Detektieren keine Aufsichtsperson mehr detektiert, wird die bewegliche Barriere in einen geschlossenen Zustand gebracht, so dass der Fallschutz automatisch aktiviert wird. Die Ablage kann mithin einen automatisch aktivierten und deaktivierten Fallschutz aufweisen.

Erfindungsgemäß, weist die Ablageeine Sperrvorrichtung auf, die so eingerichtet ist, dass die bewegliche Barriere nicht durch direkte Krafteinwirkung auf die bewegliche Barriere in den geöffneten Zustand bewegbar ist. Somit kann insbesondere verhindert werden, dass das Kleinkind auf der Ablage die Barriere selbst durch Drücken gegen die Barriere in den geöffneten Zustand bringt, und somit wieder Sturzgefahr besteht. Stattdessen wird eine solche Bewegung der Barriere durch direkte Krafteinwirkung auf die Barriere von der Sperrvorrichtung verhindert. Die Sperrvorrichtung ist gleichzeitig so ausgestaltet, dass die Einrichtung zum Detektieren die Barriere in den geöffneten Zustand bringt, sobald eine Aufsichtsperson detektiert wird, ohne dass ein Entsperren nötig ist. Die Einrichtung zum Detektieren bringt die bewegliche Barriere - wie erläutert - in den geöffneten Zustand, sobald sie eine Aufsichtsperson detektiert. Ein sicherer Betrieb der Ablage ohne aufwändiges Sichern bzw. Entsichern wird dadurch ermöglicht. Die Sperrvorrichtung kann mit der Einrichtung zum Detektieren und/oder der beweglichen Barriere mechanisch verbunden sein.

Die Sperrvorrichtung kann in eine erste Bewegungsrichtung bewegbar sein und in eine zweite Bewegungsrichtung sperren. Dies ermöglicht es, einerseits eine Bewegung der Barriere durch direkte Krafteinwirkung zu verhindern (Sperren in die zweite Bewegungsrichtung), während die Barriere über die Einrichtung zum Detektieren einer Aufsichtsperson bewegt werden kann (Bewegbarkeit in die erste Bewegungsrichtung). Damit wird eine einfache mechanische Lösung bereitgestellt, um einen sicheren Betrieb der Ablage ohne aufwändiges Sichern bzw. Entsichern zu ermöglichen.

Die Ablage kann so ausgestaltet sein, dass die Einrichtung zum Detektieren beim Bringen der beweglichen Barriere in den geöffneten Zustand die Sperrvorrichtung in die erste Bewegungsrichtung bewegt. Somit ist die Einrichtung zum Detektieren in der Lage, die Barriere zu öffnen, ohne dass die Sperrvorrichtung separat gesichert oder entsichert werden müsste. Die Sperrvorrichtung kann zum Beispiel eine drehbare Rolle aufweisen, wobei die Einrichtung zum Detektieren die Rolle in eine erste Bewegungsrichtung dreht, in die die Rolle drehbar ist, wodurch eine Bewegung der Barriere in den geöffneten Zustand ausgelöst wird. Die Rolle kann so ausgestaltet sein, dass die zweite Bewegungsrichtung einer Drehung in entgegengesetzter Richtung entspricht, in die die Rolle nicht drehbar ist. Die Rolle kann so ausgestaltet sein, dass eine direkte Krafteinwirkung auf die Barriere eine Drehung der Rolle in diese, gesperrte entgegengesetzte Richtung auslöst. Somit wird eine Bewegung der Barriere durch direkte Krafteinwirkung auf die Barriere gesperrt.

Die Ablage kann außerdem so ausgestaltet sein, dass eine direkte Krafteinwirkung auf die bewegliche Barriere eine Bewegung der Sperrvorrichtung in die zweite Bewegungsrichtung impliziert. Somit wird eine einfache mechanische Lösung bereitgestellt, mit Hilfe derer eine ungewollte Deaktivierung der Barriere durch direkte Krafteinwirkung (z.B. durch den Säugling selbst), verhindert wird. Die Krafteinwirkung wirkt in Richtung der zweiten (gesperrten) Bewegungsrichtung, sodass die Krafteinwirkung keine Bewegung der beweglichen Barriere auslösen kann. Die Ablage kann so ausgestaltet sein, dass durch eine direkte Krafteinwirkung auf die bewegliche Barriere keine Bewegung der Sperrvorrichtung in die erste Bewegungsrichtung hervorgerufen werden kann. Eine Krafteinwirkung auf die bewegliche Barriere in Richtung des geöffneten Zustands impliziert eine Bewegung der Sperrvorrichtung in die zweite Bewegungsrichtung.

Die Ablage kann auch so ausgestaltet sein, dass die Sperrvorrichtung aktiviert wird, wenn die Einrichtung zum Detektieren keine Aufsichtsperson detektiert. Ein separates Aktivieren der Sperrvorrichtung durch die Aufsichtsperson ist mithin nicht nötig. Sobald keine Aufsichtsperson mehr detektiert wird, wird die Sperrvorrichtung aktiviert. Im aktivierten Zustand kann die Sperrvorrichtung in die erste Bewegungsrichtung bewegbar sein und in die zweite Bewegungsrichtung sperren. Die bewegliche Barriere kann dann, wie erläutert, nicht durch direkte Krafteinwirkung geöffnet werden. Es wird daher ausgeschlossen, dass ein Sicherheitsrisiko entsteht, wenn sich die Aufsichtsperson schnell von der Ablage entfernt und das Aktivieren der Sperrvorrichtung vergisst.

Die Ablage kann außerdem so ausgestaltet sein, dass die Sperrvorrichtung deaktiviert wird, wenn die Einrichtung zum Detektieren eine Aufsichtsperson detektiert. Ein separates Deaktivieren der Sperrvorrichtung durch die Aufsichtsperson ist mithin nicht erforderlich. Die Aufsichtsperson kann sich mithin voll und ganz dem Kind widmen. Die Sperrvorrichtung kann im deaktivierten Zustand auch in die zweite Bewegungsrichtung bewegbar sein, so dass die bewegliche Barriere in den geschlossenen Zustand bewegt werden kann, sobald keine Aufsichtsperson mehr detektiert wird.

Die Ablage kann eine für einen Zugriff durch eine Aufsichtsperson vorgesehene Vorderseite aufweisen, wobei die bewegliche Barriere zumindest an der Vorderseite angeordnet ist. Die bewegliche Barriere an der Vorderseite ermöglicht einen bequemen Zugriff, wenn die Barriere geöffnet ist, und verhindert gleichzeitig ein Herunterfallen des Kindes an der Vorderseite, wenn die Barriere geschlossen ist. In manchen Beispielen können auch mehrere bewegliche Barrieren an der Vorderseite vorgesehen sein. In manchen Beispielen ist an zumindest einer oder auch allen der übrigen Seiten (z.B. Rückseite, rechte Seite, linke Seite) der Ablage jeweils zumindest eine unbewegliche Barriere angeordnet, die ein Herunterfallen des Kindes auch an den jeweiligen übrigen Seiten verhindert. Alternativ oder zusätzlich kann auch an zumindest einer der übrigen Seiten der Ablage zumindest eine bewegliche Barriere angeordnet sein, die wie hierin erläutert ausgestaltet ist. In einem Beispiel kann die Ablage im Wesentlichen vierseitig ausgestaltet sein, wobei die Ablage eine Vorderseite, eine Rückseite und eine rechte sowie linke Seite aufweist. Zumindest eine bewegliche Barriere kann an der Vorderseite angeordnet sein. Eine oder mehrere oder alle drei der übrigen Seiten kann z.B. jeweils eine oder mehrere unbewegliche Barrieren aufweisen, sodass ein Herabfallen des Kinds auch an diesen Seiten sicher unterbunden wird. In manchen Beispielen ist lediglich an der Vorderseite der Ablage eine bewegliche Barriere angeordnet, während eine oder zwei oder alle der übrigen Seiten keine bewegliche Barriere aufweisen.

An einer rechten Seite, einer linken Seite und/oder einer Rückseite der Ablage kann eine unbewegliche Barriere angeordnet ist. An den Seiten, die nicht für den Zugriff durch eine Aufsichtsperson vorgesehen sind, z.B. laterale (rechte und linke) Seiten und Rückseite, kann jeweils zumindest eine unbewegliche Barriere vorgesehen sein, die ein Herunterfallen des Kleinkinds verhindert. Die Barriere kann unbeweglich ausgestaltet sein, da die Barriere an diesen Seiten den Zugriff durch die Aufsichtsperson nicht wesentlich beeinträchtigt, so dass ein einfacherer und kostengünstiger Aufbau ermöglicht wird.

Die bewegliche Barriere kann zumindest ein bewegliches Element aufweisen. Beispielsweise kann das bewegliche Element eine Platte oder ein Brett aufweisen oder als Platte oder Brett ausgebildet sein. Das bewegliche Element kann z.B. an zumindest einer Seite ein elastisches und/oder weiches Material aufweisen. Damit kann eine eventuelle Berührung zwischen dem beweglichen Element und dem Säugling abgefedert werden.

Die bewegliche Barriere kann zumindest ein bewegliches Element aufweisen, das drehbar ist. Das bewegliche Element kann z.B. um eine Längsachse drehbar sein, z.B. um etwa 90°. Zum Beispiel kann das bewegliche Element von einem im Wesentlichen senkrechten Zustand (entspricht dem geschlossenem Zustand der beweglichen Barriere) in einen im Wesentlichen waagrechten Zustand (entspricht dem geöffneten Zustand der beweglichen Barriere) gedreht werden, sodass die bewegliche Barriere vom geschlossenen Zustand in den geöffneten Zustand gebracht werden kann. Zum Beispiel kann das bewegliche Element im geöffneten Zustand so angeordnet sein, dass es mit einer Oberfläche der Ablage im Wesentlichen plan abschließt. Im geschlossenen Zustand kann das bewegliche Element z.B. so angeordnet sein, dass es im Wesentlichen senkrecht zur Oberfläche der Ablage angeordnet ist. Die Oberfläche der Ablage kann zum Aufliegen des Säuglings vorgesehen sein und an einer oberen Seite der Ablage angeordnet sein.

Die bewegliche Barriere kann zumindest ein bewegliches Element aufweisen, das unter eine Oberfläche der Ablage absenkbar ist. Die Oberfläche der Ablage kann zum Aufliegen des Säuglings vorgesehen sein und an einer oberen Seite der Ablage angeordnet sein. Das bewegliche Element kann zum Beispiel von einer erhöhten Position (entspricht geschlossenem Zustand der beweglichen Barriere) in eine erniedrigte Position (entspricht geöffnetem Zustand der beweglichen Barriere) bewegt werden. Die damit verbundene Bewegungsrichtung kann z.B. im Wesentlichen senkrecht zu einer Längsachse des beweglichen Elements erfolgen. Es ist jedoch auch möglich, dass das bewegliche Element durch eine Drehbewegung absenkbar ist. Zum Beispiel kann das bewegliche Element um eine Längsachse drehbar sein, z.B. um etwa 180°. Die Drehachse kann z.B. entlang einer Unterkante oder Unterseite des beweglichen Elements (in der erhöhten Position) verlaufen. Die bewegliche Barriere kann vollständig oder lediglich teilweise unter die Oberfläche der Ablage absenkbar sein.

Die Einrichtung zum Detektieren kann so ausgestaltet sein, dass sie ein Gewicht der Aufsichtsperson detektiert. Dadurch kann z.B. detektiert werden, sobald sich eine Aufsichtsperson an der Ablage befindet, z.B. sich an einer für einen Zugriff durch die Aufsichtsperson vorgesehenen Seite (Vorderseite) der Ablage platziert. Gleichzeitig kann verhindert werden, dass die Detektion einer Aufsichtsperson fälschlicherweise durch ein Kleinkind, z.B. ein Geschwisterkind, oder z.B. durch Haustiere ausgelöst wird, die ein zu geringes Gewicht aufweisen. Erfindungsgemäß, ist die Einrichtung zum Detektieren konfiguriert, eine Präsenz einer Person mit einem Körpergewicht über einem gewissen Schwellwert detektieren (z.B. > 30 kg, z.B. etwa einem zehnjährigen Kind entsprechend; > 40 kg; > 50 kg; > 60 kg etc.). Zum Beispiel kann die Einrichtung zum Detektieren so ausgestaltet sein, dass sie das Gewicht der Aufsichtsperson an der Vorderseite der Ablage detektiert.

Die Einrichtung zum Detektieren weist erfindungsgemäß, eine Fläche auf, die dazu ausgestaltet ist, die Aufsichtsperson aufzunehmen. Erfindungsgemäß, ist die Fläche an einer Vorderseite der Ablage vorgesehen. Wenn eine Aufsichtsperson auf die Ablage zugreifen will, betritt sie zwangsläufig die Fläche an der Vorderseite der Ablage. Sobald die Fläche die Aufsichtsperson aufnimmt, wird dies detektiert, so dass die Einrichtung zum Detektieren die bewegliche Barriere in den geöffneten Zustand bewegt. Wenn die Aufsichtsperson die Fläche wieder verlässt, wird dies ebenfalls detektiert, so dass die Einrichtung zum Detektieren die bewegliche Barriere in den geschlossenen Zustand bewegt. Zum Beispiel kann das Gewicht der Aufsichtsperson auf der Fläche eine Bewegung der Fläche auslösen (z.B. der Gewichtskraft folgend nach unten), die wiederum eine Öffnung der beweglichen Barriere auslöst. Zum Beispiel kann die Einrichtung zum Detektieren eine Feder oder eine andere Rückstelleinrichtung aufweisen, die die bewegliche Barriere automatisch wieder in den geschlossenen Zustand bringt (z.B. durch eine Bewegung der Fläche nach oben), wenn das Gewicht der Aufsichtsperson die Fläche wieder verlässt.

Die Fläche kann so ausgestaltet sein, dass sie sich bei Aufnahme einer Aufsichtsperson nach unten bewegt, so dass die bewegliche Barriere mechanisch in den geöffneten Zustand gebracht wird. Dies hat den Vorteil einer einfachen mechanischen Lösung, die kostengünstig herstellbar und wenig fehleranfällig ist. Eine Rückstelleinrichtung kann sicherstellen, dass die Fläche sich wieder nach oben bewegt, wenn die Aufsichtsperson die Fläche verlässt, so dass die bewegliche Barriere mechanisch in den geschlossenen Zustand gebracht wird.

Die Ablage kann zumindest eine Schublade aufweisen. Die Ablage kann somit z.B. als Wickeltisch oder Wickelkommode ausgestaltet sein, die gleichzeitig Stauraum bietet. Die Schublade kann unter der Oberfläche der Ablage angeordnet sein.

Die Ablage kann eine Einrichtung zum Verriegeln der zumindest einen Schublade aufweisen, welche so ausgebildet ist, dass sie aktiviert wird, wenn die Einrichtung zum Detektieren eine Aufsichtsperson detektiert. In der Praxis passiert es nämlich in einigen Fällen sogar, dass ein Säugling vom Wickeltisch fällt, obwohl eine erwachsene Person davorsteht - in der Regel dann, wenn die Person damit beschäftigt ist, etwas aus den unteren Schubladen des Wickeltischs zu holen und damit ihren Blick von dem Säugling abwendet. Dies wird durch ein Verriegeln der Schublade verhindert. Ein Ablenken der Aufsichtsperson durch ein Hervorholen eines Gegenstands aus der Schublade, oder durch ein Suchen in der Schublade und die damit verbundene Abwendung des Blicks der Aufsichtsperson ist ausgeschlossen. Ein Zugriff kann nur bei geschlossener Barriere erfolgen, z.B. durch ein seitliches Zugreifen auf die Schublade (wenn die Einrichtung zum Detektieren so ausgestaltet ist, dass die Aufsichtsperson an einer Vorderseite der Ablage detektiert wird).

Es kann auch eine Ablage zum Wickeln eines Säuglings oder Kleinkinds vorgesehen sein, die eine Einrichtung zum automatischen Detektieren einer Aufsichtsperson, zumindest eine Schublade und eine Einrichtung zum Verriegeln der zumindest einen Schublade aufweist. Die Einrichtung zum Verriegeln kann so ausgebildet sein, dass sie aktiviert wird, wenn die Einrichtung zum Detektieren eine Aufsichtsperson detektiert. Mit anderen Worten: Die Ablage muss nicht zwingend eine bewegliche Barriere aufweisen. Die Ablage kann aber im Übrigen mit den hierin beschriebenen Merkmalen ausgestaltet sein.

Die Einrichtung zum Verriegeln kann so ausgebildet sein, dass sie deaktiviert wird, wenn die Einrichtung zum Detektieren keine Aufsichtsperson detektiert. Somit kann auf die Schublade wieder zugegriffen werden, ohne dass die Aufsichtsperson diese separat entriegeln müsste. Sobald keine Aufsichtsperson mehr detektiert wird, wird die Einrichtung zum Verriegeln von der Einrichtung zum Detektieren deaktiviert.

Die Einrichtung zum Verriegeln kann so ausgebildet sein, dass zumindest eine untere Schublade der Ablage verriegelt wird. Eine oder mehrere obere Schubladen können jedoch z.B. unverriegelt bleiben. Die im Zusammenhang mit einer Schublade beschriebene Einrichtung zum Verriegeln kann alternativ oder zusätzlich auch zum Verriegeln einer oder mehrerer Türen der Ablage verwendet werden.

Es kann auch eine umgekehrt ausgestalte Einrichtung zum Verriegeln vorgesehen sein, welche so ausgebildet ist, dass sie deaktiviert wird, wenn die Einrichtung zum Detektieren eine Aufsichtsperson detektiert. Die Einrichtung zum Verriegeln kann so ausgebildet sein, dass sie aktiviert wird, wenn die Einrichtung zum Detektieren keine Aufsichtsperson (mehr) detektiert. Dies ist ganz allgemein für Anwendungen für Schubladen eines beliebigen Einrichtungsgegenstands denkbar, z.B. einer Kommode, eines Schranks, etc. Es kann eine Einrichtung zum Verriegeln einer Schublade vorgesehen sein, welche so ausgebildet ist, dass sie deaktiviert wird, wenn eine Einrichtung zum Detektieren eine Aufsichtsperson detektiert. Zum Beispiel kann die Einrichtung zum Detektieren an einer Vorderseite (für den Zugriff vorgesehen) des Einrichtungsgegenstands und allgemein wie hierin erläutert ausgebildet sein. Wenn eine Aufsichtsperson detektiert wird, wird die Schublade jedoch entriegelt. Sobald keine Aufsichtsperson mehr detektiert wird, wird die Schublade verriegelt, d.h. die Einrichtung zum Verriegeln wird wieder aktiviert. Zum Beispiel kann so verhindert werden, dass sich eine Schublade ungewollt öffnet (z.B. auf Schiffen, in Flugzeugen, etc.), und gleichzeitig kann die Schublade von einer Aufsichtsperson bequem und unkompliziert geöffnet werden.

Die Einrichtung zum automatischen Detektieren einer Aufsichtsperson kann mechanisch ausgelöst werden, z.B. gemäß den hierin beschriebenen Beispielen. Es ist aber auch möglich, die Einrichtung zum Detektieren z.B. elektronisch auszulösen. Zum Beispiel kann eine Präsenz einer Aufsichtsperson durch eine oder mehrere Lichtschranken, kapazitive Berührungssensoren und/oder berührungs- oder gewichtsempfindliche Fußmatten detektiert werden. Die Einrichtung zum Detektieren kann z.B. eine Lichtschranke, einen kapazitiven Berührungssensor und/oder eine berührungs- oder gewichtsempfindliche Fußmatte aufweisen. Diese können so eingerichtet sein, dass eine Aufsichtsperson automatisch detektiert wird, z.B. wenn sich eine Aufsichtsperson an einer Vorderseite der Ablage platziert. Die entsprechende Signalübertragung ließe sich z.B. drahtgebunden, z.B. über Kabel, oder auch kabellos realisieren, wobei z.B. Motoren die Bewegung der Barriere und/oder Verriegelung der Schubladen etc. übernehmen.

Während die vorliegende Erfindung vorliegend primär in Bezug auf Ablagen zum Wickeln von Säuglingen oder Kleinkindern beschrieben wird, ist deren Anwendung auch auf andere Ablagen denkbar.

### 4. Kurze Beschreibung der Figuren:

In der nachfolgenden ausführlichen Beschreibung werden mögliche Ausführungsformen der Erfindung unter Bezugnahme auf die folgenden Figuren beschrieben:
- Fig. 1a-b:: Erstes Ausführungsbeispiel einer Ablage mit einer beweglichen Barriere in einem geschlossenen und einem geöffneten Zustand;
- Fig. 2a-b:: Zweites Ausführungsbeispiel einer Ablage mit einer beweglichen Barriere in einem geschlossenen und einem geöffneten Zustand mit einer Sperrvorrichtung;
- Fig. 3a-b:: Drittes Ausführungsbeispiel einer Ablage mit einer beweglichen Barriere in einem geschlossenen und einem geöffneten Zustand mit einer Sperrvorrichtung und einer Einrichtung zum Verriegeln einer Schublade;
- Fig. 4a-b:: Viertes Ausführungsbeispiel einer Ablage mit einer beweglichen Barriere in einem geschlossenen und einem geöffneten Zustand mit einer Sperrvorrichtung;
- Fig. 5a-b:: Fünftes nicht erfindungsgemäßes Beispiel einer Ablage mit einer beweglichen Barriere in einem geschlossenen und einem geöffneten Zustand;

### 5. Detaillierte Beschreibung bevorzugter Ausführungsformen:

Mögliche Ausführungsformen der vorliegenden Erfindung werden nachfolgend der Einfachheit halber hauptsächlich in Bezug auf Wickeltische und/oder Wickelkommoden beschrieben werden. Jedoch kann das Konzept der vorliegenden Erfindung auf ähnliche Weise auch auf Ablagen, die z.B. als Aufsätze für Wickeltische und/oder Wickelkommoden vorgesehen sind, oder auf andere Arten von Oberflächen, z.B. Tische, Werkbänke, Zeichentische und Kommoden im Allgemeinen angewendet werden.

Außerdem können der Kürze halber nachfolgend lediglich einige Ausführungsformen beschrieben werden. Der Fachmann wird erkennen, dass die spezifischen Merkmale, die mit Bezug auf diese Ausführungsformen beschrieben sind, geändert und auf andere Weisen kombiniert werden können, und dass einzelne Merkmale ausgelassen werden können, wenn diese nicht wesentlich sind. Die allgemeinen Erläuterungen in den obigen Abschnitten behalten auch für die folgenden detaillierteren Ausführungen Gültigkeit.

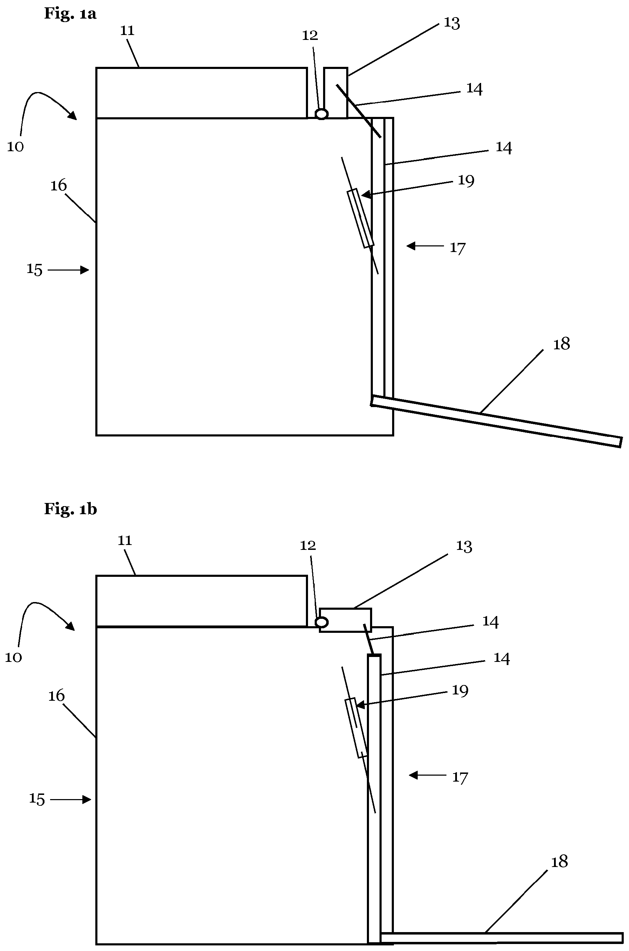

Fig. 1a zeigt eine Seitenansicht eines ersten Ausführungsbeispiels für eine Ablage 10 zum Wickeln eines Säuglings oder Kleinkinds mit einer beweglichen Barriere 13 in einem geschlossenen Zustand. Die Ablage 10 ist als ein Wickeltisch ausgebildet, der eine Rückseite 15 und eine für einen Zugriff durch eine Aufsichtsperson vorgesehene Vorderseite 17 aufweist. Die Ablage 10 weist eine Seitenwand 16 auf. In anderen Ausführungsbeispielen können mehrere Seitenwände vorgesehen sein, oder es kann auch keine Seitenwand vorgesehen sein. Die Ablage 10 kann eine für den Zugriff durch eine erwachsene Aufsichtsperson angenehme Höhe von etwa 70 cm bis 120 cm, oder etwa 80 cm bis 100 cm aufweisen. In anderen Ausführungsbeispielen kann die Ablage auch mit geringerer Höhe ausgeführt sein, wobei sie dann insbesondere als eine Auflage für einen Tisch bzw. eine Kommode, eine Badewanne, etc. ausgebildet sein kann.

Die Ablage 10 weist eine obere Oberfläche auf, die zur Ablage des Säuglings bzw. Kleinkinds vorgesehen ist. Die bewegliche Barriere 13 ist an der oberen Oberfläche der Ablage 10 und der Vorderseite 17 der Ablage 10 zugewandt angeordnet. Sie verhindert ein Herabfallen des Kleinkinds über die Vorderseite 17 der Ablage 10. Die bewegliche Barriere 13 kann sich im Wesentlichen senkrecht zur oberen Oberfläche der Ablage 10 und im Wesentlichen parallel zur Vorderseite 17 der Ablage 10 erstrecken (bzw. bei einer abgerundeten Ablage tangential zur Vorderseite).

Die bewegliche Barriere 13 weist ein bewegliches Element auf, das drehbar angeordnet ist. Das bewegliche Element kann von einer im wesentlichen senkrechten Anordnung (geschlossene Position) in eine im wesentlichen waagrechte Anordnung (geöffnete Position) drehbar sein. Das bewegliche Element kann als Brett ausgebildet sein. Die bewegliche Barriere 13 weist eine Drehachse 12 auf, die im Wesentlichen parallel zur Vorderseite 17 der Ablage 10 verläuft. Zum Beispiel kann die Drehachse 12 entlang einer unteren Kante des beweglichen Elements verlaufen. Die Drehachse 12 kann als ein Scharnier ausgebildet sein oder ein Scharnier aufweisen, das z.B. an der oberen Oberfläche der Ablage 10 befestigt sein kann. Statt eines Scharniers können auch andere Elemente zur drehbaren Lagerung des beweglichen Elements vorgesehen sein, z.B. eine Welle etc.

Die Ablage 10 weist an der Vorderseite 17 eine Fläche 18 zur Aufnahme einer Aufsichtsperson auf. Die Fläche 18 kann so vorgesehen sein, dass sie vor der Vorderseite 17 der Ablage 10 am Boden angeordnet ist. Erfindungsgemäß, erstreckt sich die Fläche 18 im Wesentlichen entlang der vollständigen Breite der Vorderseite 17 der Ablage 10. Die Fläche 18 ist so ausgebildet, dass die Aufsichtsperson zum Zugriff auf die Ablage 10 die Fläche 18 betreten muss. Die Fläche 18 ist somit dazu eingerichtet, die Aufsichtsperson aufzunehmen und als Einrichtung zum automatischen Detektieren der Aufsichtsperson zu wirken. Wenn eine Aufsichtsperson auf die Ablage 10 zugreifen möchte, muss diese die Fläche 18 betreten.

Die Fläche 18 kann als zumindest ein Brett ausgebildet sein. Die Fläche 18 ist über zumindest ein Verbindungselement 14 mit der beweglichen Barriere 13 verbunden. Im dargestellten Ausführungsbeispiel sind zwei Verbindungselemente 14 vorgesehen, die starr, z.B. als Stangen oder Balken ausgebildet sind. Das obere Verbindungselement 14 ist mit dem unteren Verbindungselement 14 und mit der beweglichen Barriere 13 (genauer: mit dem beweglichen Element der beweglichen Barriere 13) über ein Drehgelenkt verbunden. Das untere Verbindungselement 14 ist über ein Drehgelenk mit der Fläche 18 verbunden. Es können jeweils Verbindungselemente 14 an der linken und/oder der rechten Seite der Ablage 10 vorgesehen sein. Zum Beispiel können die Verbindungselemente 14 aber auch nur jeweils einmal vorgesehen sein, z.B. an einer lateralen Seite der Ablage 10 oder mittig. In anderen Ausführungsformen kann eine andere Anzahl und/oder Art von Verbindungselementen, z.B. lediglich Zugkräfte übertragende Elemente, z.B. Seil, Kette, etc., verwendet werden.

Das untere Verbindungselement 14 ist mit einer Rückstelleinrichtung 19 verbunden. Die Rückstelleinrichtung kann z.B. eine mechanische oder pneumatische Feder aufweisen. Im dargestellten Ausführungsbeispiel weist die Rückstelleinrichtung 19 eine Zugfeder auf. Die Rückstelleinrichtung 19 ist einerseits mit dem unteren Verbindungselement 14 und andererseits mit der Ablage 10, z.B. mit der Seitenwand 16 der Ablage 10, verbunden, so dass eine Rückstellkraft zwischen der Ablage 10 und dem Verbindungselement 14 übertragen werden kann. Die Rückstelleinrichtung 19 kann mit einer beliebigen Orientierung montiert sein. Wichtig ist, dass sie die bewegliche Barriere 13 verlässlich in den geschlossenen Zustand zurückbringt, sobald keine Aufsichtsperson mehr detektiert wird.

In anderen Ausführungsbeispielen kann alternativ oder zusätzlich zumindest eine Rückstelleinrichtung 19 mit der Fläche 18, einem anderen Verbindungselement 14 und/oder der beweglichen Barriere 13 verbunden sein. Auch kann zumindest eine Rückstelleinrichtung alternativ oder zusätzlich bereitgestellt werden, die eine Druckfeder, z.B. eine Gasdruckfeder, aufweist. Die Druckfeder kann z.B. an einer Unterseite der Fläche 18 angeordnet sein, z.B. zwischen der Fläche 18 und einer unteren Fläche der Ablage 10.

Die Verbindungselemente 14 und die Rückstelleinrichtung 19 können zumindest teilweise innerhalb der Ablage 10 angeordnet sein. Zum Beispiel können die Seitenwand 16 und optional Vorder- und Rückwand der Ablage die Verbindungselemente 14 und die Rückstelleinrichtung 19 zumindest teilweise umgeben.

Die Rückstelleinrichtung 19 ist so eingerichtet, dass sich die Fläche 18 bei Aufnahme eines bestimmten Gewichts entgegen der Kraft der Rückstelleinrichtung 19 nach unten bewegt. Über die Verbindungselemente 14 wird dadurch das bewegliche Element der beweglichen Barriere 13 um die Drehachse 12 rotiert, so dass die bewegliche Barriere 13 in den geöffneten Zustand bewegt wird (in Fig. 1b gezeigt).

Die Ablage 10 weist neben der beweglichen Barriere 13 zumindest eine unbewegliche Barriere 11 auf, um ein Herunterfallen des Säuglings auch über zumindest eine andere Seite der Ablage 10 zu verhindern. Die unbewegliche Barriere 11 kann fest mit der Ablage 10, z.B. der oberen Oberfläche der Ablage 10 verbunden sein. In der Seitenansicht gemäß Fig. 1a ist lediglich eine unbewegliche Barriere 11 an einer lateralen (z.B. linken) Seite der Ablage 10 gezeigt. Eine unbewegliche Barriere kann jedoch auch an beiden lateralen Seiten und/oder an der Rückseite 15 der Ablage 10 angeordnet sein. In anderen Ausführungsbeispielen können auch die Barrieren an diesen Seiten beweglich ausgebildet sein, wie mit Bezug auf die bewegliche Barriere 13 beschrieben.

Fig. 1b zeigt die Ablage 10 mit der beweglichen Barriere 13 im geöffneten Zustand. Das bewegliche Element der beweglichen Barriere 13 kann im geöffneten Zustand im Wesentlichen parallel zur oberen Oberfläche der Ablage 10 angeordnet sein. Das bewegliche Element der beweglichen Barriere kann im geöffneten Zustand im Wesentlichen plan mit der oberen Oberfläche der Ablage 10 abschließen. Die Ablage 10 kann z.B. eine Vertiefung zur zumindest teilweisen Aufnahme des beweglichen Elements im geöffneten Zustand aufweisen. Die Bewegung der beweglichen Barriere 13 vom geschlossenen in den geöffneten Zustand kann z.B. einer Drehung um etwa 70° bis 100° entsprechen, z.B. etwa 80° oder etwa 90°.

Die Rückstelleinrichtung 19 ist so eingerichtet, dass beim Verlassen der Fläche 18 durch die Aufsichtsperson die Fläche 18 durch die Rückstelleinrichtung 19 wieder nach oben bewegt wird, so dass das bewegliche Element der beweglichen Barriere 13 in den geschlossenen Zustand gebracht wird (in Fig. 1a dargestellt).

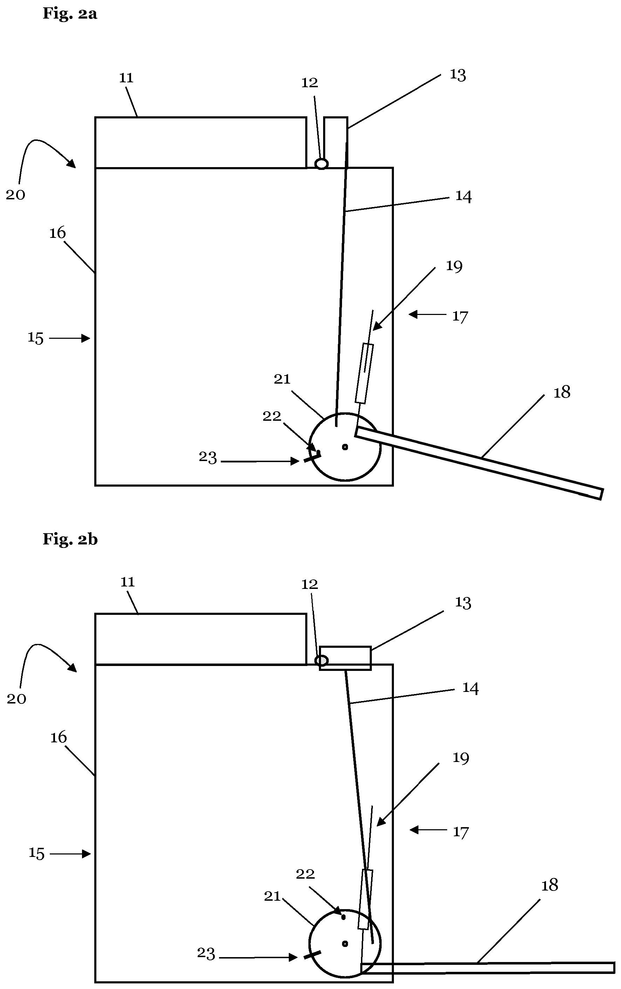

Fig. 2a zeigt eine Seitenansicht eines zweiten Ausführungsbeispiels für eine Ablage 20 zum Wickeln mit einer beweglichen Barriere 13 in einem geschlossenen Zustand. Die Ablage 20 weist eine Vorderseite 17 und eine Rückseite 15, eine unbewegliche Barriere 11 und eine Seitenwand 16, sowie eine Fläche 18 auf, die ähnlich zu den entsprechenden Elementen ausgebildet sein können, die mit Bezug auf Fig. 1a und Fig. 1b beschrieben wurden.

An der Vorderseite 17 der Ablage 20 ist eine bewegliche Barriere 13 angeordnet, die ein bewegliches Element und eine Drehachse 12 aufweist, welche ebenfalls ähnlich wie mit Bezug auf Fig. 1a beschrieben ausgestaltet sein können. Darüber hinaus ist das bewegliche Element der beweglichen Barriere 13 über ein Verbindungselement 14 mit einer Sperrvorrichtung 21 verbunden. Das Verbindungselement 14 kann ähnlich wie mit Bezug auf Fig. 1a und Fig. 1b erläutert ausgestaltet sein. Das Verbindungselement 14 ist starr ausgebildet. Das Verbindungselement 14 kann gelenkig mit dem beweglichen Element der beweglichen Barriere 13 und/oder der Sperrvorrichtung 21 verbunden sein. Die Sperrvorrichtung 21 ist wiederum mit der Fläche 18 verbunden, wobei in Fig. 2a eine gelenkige Verbindung vorgesehen ist. Es können jedoch auch eines oder mehrere Verbindungselemente vorgesehen sein, die die Sperrvorrichtung 21 und die Fläche 18 verbinden.

Die Sperrvorrichtung 21 ist drehbar eingerichtet, und weist z.B. eine Rolle auf, die drehbar angeordnet ist. Die Drehachse kann im Wesentlichen parallel zur Drehachse des beweglichen Elements und/oder im Wesentlichen senkrecht zur Bewegungsrichtung der Fläche 18 angeordnet sein. Die Fläche 18 ist so ausgestaltet, dass sie sich bei Aufnahme einer Aufsichtsperson durch die Fläche 18 entgegen einer mit der Fläche 18 verbundenen Rückstellungeinrichtung 19 nach unten bewegt. Die Fläche 18 ist so mit der Sperrvorrichtung 21 verbunden, dass letztere ebenfalls bewegt wird, wenn sich die Fläche 18 nach unten bewegt.

Im Ausführungsbeispiel der Fig. 2a ist die Fläche 18 so mit der Sperrvorrichtung 21 verbunden, dass sich die Sperrvorrichtung 21 bzw. die Rolle der Sperrvorrichtung 21 bei einer Bewegung der Fläche 18 nach unten im Uhrzeigersinn dreht. Die Sperrvorrichtung 21 ist darüber hinaus so (über das Verbindungselement 14) mit dem beweglichen Element der beweglichen Barriere 13 verbunden, dass die Drehung der Sperrvorrichtung 21 im Uhrzeigersinn das bewegliche Element vom geschlossenen in den geöffneten Zustand bewegt (in Fig. 2b gezeigt). Im Ausführungsbeispiel gemäß Fig. 2a führt die Drehung der Sperrvorrichtung 21 im Uhrzeigersinn zunächst zu einer minimalen Bewegung des starren Verbindungselements 14 nach oben, um eine radial ausgerichtete Stellung gegenüber der (Rolle der) Sperrvorrichtung 21 zu passieren. Ab diesem Punkt ist die bewegliche Barriere 13 auch durch direkte Krafteinwirkung in den geöffneten Zustand bewegbar (deaktivierter Zustand der Sperrvorrichtung). Bei der Bewegung der Fläche 18 nach unten wird die Sperrvorrichtung jedoch weitergedreht, so dass das Verbindungselement 14 nach Passieren der radialen Stellung nach unten bewegt wird. Das bewegliche Element der beweglichen Barriere 13 wird somit in den geöffneten Zustand gebracht, z.B. wie erläutert um die Achse 12 gedreht.

Die Sperrvorrichtung 21 weist ein Sperrelement 22 auf, das z.B. als Erhebung oder Bolzen ausgestaltet sein kann. Die Ablage 20 weist darüber hinaus einen Anschlag 23 auf. Der Anschlag 23 kann z.B. an der Seitenwand 16 der Ablage 20 angeordnet sein. Im Ausführungsbeispiel gemäß Fig. 2a sind das Sperrelement 22 und der Anschlag 23 so angeordnet, dass im geschlossenem Zustand der beweglichen Barriere 13 eine Bewegung der beweglichen Barriere 13 in Richtung des geöffneten Zustands durch direkte Krafteinwirkung auf die bewegliche Barriere 13 verhindert wird (aktivierter Zustand der Sperrvorrichtung). Dies wird durch geeignete Verbindung des beweglichen Elements der beweglichen Barriere 13 über das starre Verbindungselements 14 mit der Sperrvorrichtung 21 erreicht.

Im Ausführungsbeispiel gemäß Fig. 2a kann sich die Sperrvorrichtung 21 aufgrund der Anordnung des Sperrelements 22 und des Anschlags 23 nur im Uhrzeigersinn drehen, nicht jedoch entgegen dem Uhrzeigersinn. Eine Krafteinwirkung auf die bewegliche Barriere 13 in Richtung des geöffneten Zustands führt zu einer Bewegung des Verbindungselements 14 nach unten. Das Verbindungselement 14 ist so mit der Sperrvorrichtung 21 verbunden, dass eine Bewegung des Verbindungselements 14 nach unten eine Drehung der Sperrvorrichtung 21 entgegen dem Uhrzeigersinn impliziert, die jedoch gesperrt ist. Diese Bewegung wird durch das Zusammenwirken des Sperrelements 22 und des Anschlags 23 gerade verhindert, so dass das bewegliche Element nicht durch direkte Krafteinwirkung auf die bewegliche Barriere 13 in den geöffneten Zustand gebracht werden kann. Hierfür ist wichtig, dass das Verbindungselement 14 starr ausgebildet ist. Die Sperrvorrichtung 21 ist so eingerichtet, dass dies allein - wie erläutert - durch die Fläche 18 erreicht werden kann, welche eine Drehung der Sperrvorrichtung 21 im Uhrzeigersinn bewirkt.

Das Sperrelement 22 und der Anschlag 23 können allgemein so angeordnet sein, dass in geschlossenem Zustand der beweglichen Barriere 13 eine Bewegung der Sperrvorrichtung 21 nur in eine erste Richtung möglich ist, die einer Bewegung der Fläche 18 nach unten entspricht, eine Bewegung in eine zweite Richtung, die einer Bewegung der Fläche 18 nach oben entspricht, jedoch nicht. Im gezeigten Ausführungsbeispiel gemäß Fig. 2a kann sich die Rolle aufgrund der Anordnung des Sperrelements 22 und des Anschlags 23 nur im Uhrzeigersinn (entspricht einer Bewegung der Fläche 18 nach unten) bewegen, nicht jedoch entgegen dem Uhrzeigersinn (entspricht einer Bewegung der Fläche 18 nach oben).

Fig. 2b zeigt die Ablage 20 mit der beweglichen Barriere 13 im geöffneten Zustand. Sobald die Aufsichtsperson die Fläche 18 verlässt, wird die Fläche 18 durch die Rückstelleeinrichtung 19 wieder nach oben bewegt. Die bewegliche Barriere 13 wird in den geschlossenen Zustand gebracht. Die Sperrvorrichtung 21 wird dabei wieder in den aktivierten Zustand gebracht, in der das Sperrelement 22 am Anschlag 23 anliegt.

Die Rückstelleinrichtung 19 kann ähnlich wie mit Bezug auf Fig. 1a und Fig. 1b erläutert ausgebildet sein. In anderen Ausführungsbeispielen kann alternativ oder zusätzlich zur Rückstelleinrichtung 19 eine Rückstelleinrichtung vorgesehen sein, die mit der Sperrvorrichtung 21 verbunden ist, so dass die Sperrvorrichtung 21 beim Verlassen der Fläche 18 durch die Aufsichtsperson entgegen dem Uhrzeigersinn zurückgedreht wird. Alternativ oder zusätzlich kann eine Rückstelleinrichtung auch mit dem Verbindungselement 14 und/oder der beweglichen Barriere 13 verbunden sein. In manchen Ausführungsbeispielen kann die Rückstelleinrichtung 19 alternativ oder zusätzlich eine Druckfeder aufweisen, wie mit Bezug auf Fig. 1a und Fig. 1b erläutert.

Wie mit Bezug auf Fig. 1a und Fig. 1b erläutert können die Rückstelleinrichtung 19 und das Verbindungselement 14 zumindest teilweise innerhalb der Ablage 20 angeordnet sein. Auch die Rückstelleinrichtung 21 und der Anschlag 23 können innerhalb der Ablage 20 angeordnet sein.

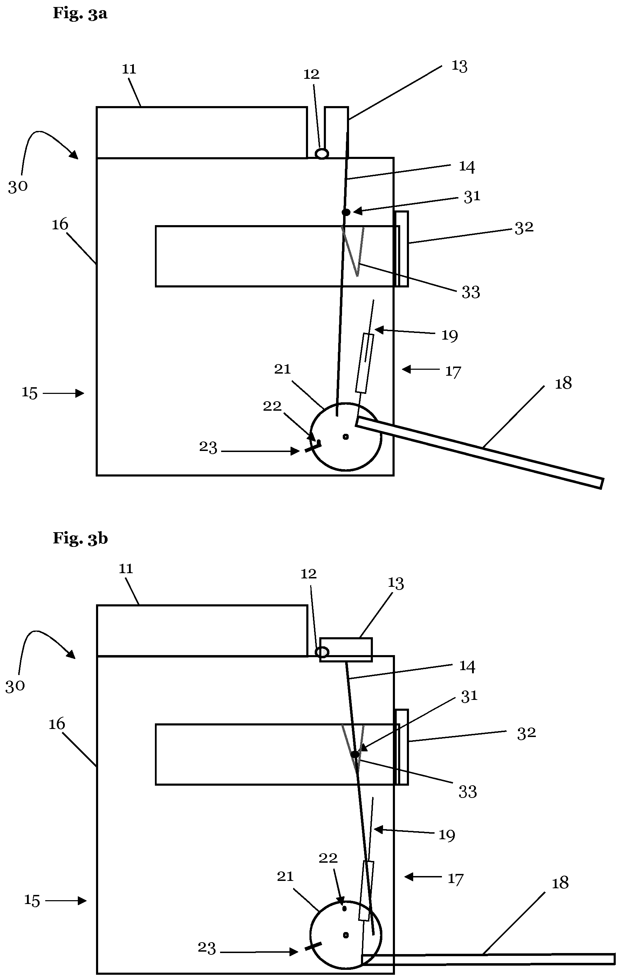

Fig. 3a und 3b zeigen eine Seitenansicht eines weiteren Ausführungsbeispiels einer Ablage 30. Die Ablage 30 weist eine unbewegliche Barriere 11 und eine Seitenwand 16 auf. An einer Vorderseite 17, die einer Rückseite 15 gegenüberliegt, weist die Ablage 30 eine bewegliche Barriere 13 auf, die um eine Drehachse 12 drehbar ist. Die Ablage 30 weist darüber hinaus eine Fläche 18, eine bewegliche Barriere 13, ein Verbindungselement 14, eine Rückstelleinrichtung 19, und eine Sperrvorrichtung 21 mit einem Sperrelement 22, sowie einen Anschlag 23 auf. Insofern kann die Ablage 30 ähnlich zur Ablage 20, die mit Bezug auf Fig. 1a, 1, 2a, 2b beschrieben wurde, ausgebildet sein.

Zudem weist die Ablage 30 eine Schublade 32 auf, die innerhalb der Ablage 30 angeordnet sein kann. Die Schublade 32 kann an der Vorderseite 17 der Ablage 30 und in Richtung der Vorderseite horizontal beweglich angeordnet sein. Obwohl in Fig. 3a nur eine Schublade 32 gezeigt ist, können auch mehrere Schubladen 32 vorgesehen sein. Die zumindest eine Schublade 32 weist eine Blockiereinrichtung 33 auf, die z.B. als eine Vertiefung in einer Seitenwand der Schublade 32 ausgebildet sein kann. Zum Beispiel kann eine konische Einkerbung, die an einer oberen Seite einer Seitenwand der Schublade 32 angeordnet sein kann, oder eine durchgängige Durchbrechung einer Seitenwand der Schublade 32 vorgesehen sein. Alternativ oder zusätzlich kann die Blockiereinrichtung 33 eine Erhebung an einer Seitenwand der Schublade 32 aufweisen. Das Verbindungselement 14 weist eine Verdickung 31 auf, die z.B. als ein Bolzen ausgebildet sein kann. Die Verdickung 31 und die Blockiereinrichtung 33 können an einer Seite der Schublade 32 oder an beiden Seiten der Schublade 32 angeordnet sein.

Wie in Fig. 3b gezeigt und bereits vorstehend in Bezug auf Fig. 1a, 1b, 2a, 2b erläutert, bewegt sich das Verbindungselement 14 nach unten, wenn die Fläche 18 eine Aufsichtsperson aufnimmt, so dass die Barriere 13 in den geöffneten Zustand gebracht wird. Die Verdickung 31 des Verbindungselements 14 bewegt sich entsprechend ebenfalls nach unten in eine Blockierstellung. Die Verdickung 31 und die Blockiereinrichtung 33 sind so ausgestaltet, dass ein Öffnen der Schublade 32 in der Blockierstellung verhindert wird. Die Verdickung 31 kann in der Blockierstellung z.B. an der Blockiereinrichtung 33 anliegen, so dass eine Bewegung der Blockiereinrichtung 33 in horizontaler Richtung, oder zumindest in horizontaler Richtung hin zur Vorderseite 17 der Ablage 30 verhindert wird. Mit anderen Worten wird beim Detektieren einer Aufsichtsperson an der Vorderseite 17 der Ablage 30 nicht nur die bewegliche Barriere 13 in den geöffneten Zustand gebracht, sondern auch ein Öffnen der Schublade 32 blockiert. So wird verhindert, dass die Aufsichtsperson durch ein Öffnen der Schublade 32 und ein darauffolgendes Suchen von Gegenständen in der Schublade 32 und/oder ein Herausholen von Gegenständen aus der Schublade 32 abgelenkt wird.

Sobald keine Aufsichtsperson mehr detektiert wird, d.h. im Ausführungsbeispiel der Fig. 3b, sobald die Aufsichtsperson die Fläche 18 verlässt, wird die Verdickung 31 wieder aus der Blockierstellung bewegt (in Fig. 3a dargestellt). Im Ausführungsbeispiel der Fig. 3b erfolgt diese Bewegung nach oben aus der Blockiereinrichtung 33 heraus. Die Schublade 32 kann somit wieder geöffnet werden.

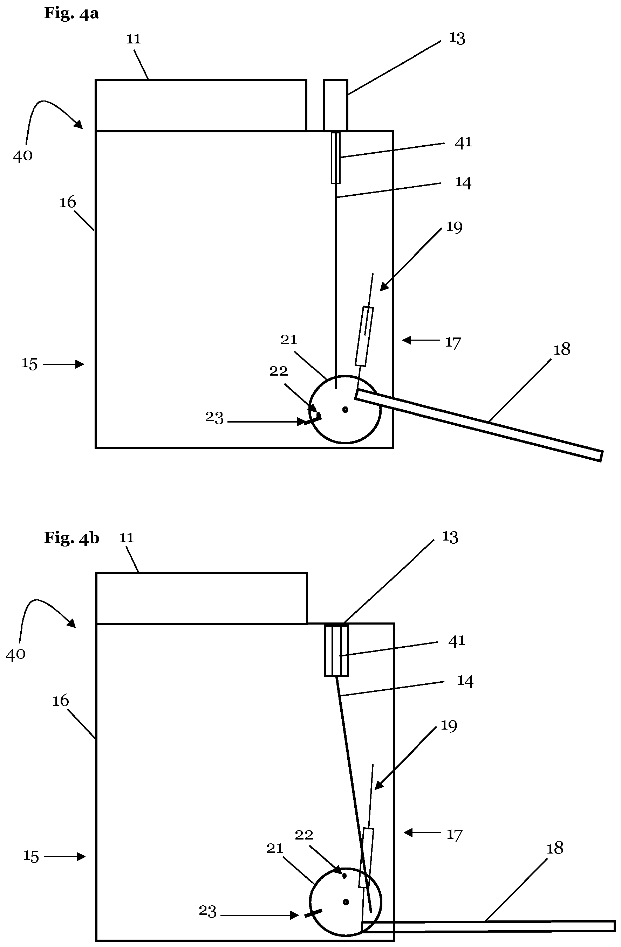

Fig. 4a und 4b zeigen Seitenansichten eines weiteren Ausführungsbeispiels für eine Ablage 40. Die Ablage 40 weist eine Vorderseite 17, eine Rückseite 15, eine unbewegliche Barriere 11, eine Seitenwand 16, eine Fläche 18, eine Rückstelleinrichtung 19, eine Sperrvorrichtung 21 mit einem Sperrelement 22 und einen Anschlag 23 auf. Die Ablage 40 kann diesbezüglich ähnlich wie mit Bezug auf Fig. 2a, 2b, 3a, 3b erläutert ausgebildet sein.

Die Ablage 40 weist eine beweglich Barriere 13 mit einem beweglichen Element auf. Das bewegliche Element kann wie vorstehend mit Bezug auf Fig. 1a, 1b, 2a, 2b, 3a, 3b erläutert ausgebildet sein. Jedoch ist das bewegliche Element nicht drehbar angeordnet. Vielmehr ist es so über ein Verbindungselement 14 mit der Sperrvorrichtung 21 verbunden, dass es bei einer Bewegung der Fläche 18 nach unten, nach unten bewegt wird. Zum Beispiel kann die Ablage 40 eine Vertiefung aufweisen, in die das bewegliche Element zumindest teilweise abgesenkt wird. Das bewegliche Element kann senkrecht in die Ablage 40 versenkt werden. Die Ablage 40 kann eine Führungseinrichtung 41 aufweisen, z.B. eine Schiene, um ein leichtes und gleichmäßiges Absenken des beweglichen Elements zu erleichtern. Die Führungseinrichtung 41 kann verhindern, dass sich das bewegliche Element verkeilt oder dass es verkippt.

Das bewegliche Element kann durch die Bewegung der Fläche 18 nach unten, die durch Aufnahme einer Aufsichtsperson ausgelöst wird, in den geöffneten Zustand gebracht werden (in Fig. 4b dargestellt). Im geöffneten Zustand kann eine Oberseite des beweglichen Elements mit einer oberen Oberfläche der Ablage 40 plan abschließen, die zum Ablegen des Säuglings vorgesehen ist.

Wenn die Aufsichtsperson die Fläche 18 verlässt, wird diese durch die Rückstelleinrichtung 19 wieder nach oben bewegt, so dass sich auch das Verbindungselement 14 und mithin das bewegliche Element der beweglichen Barriere 13 nach oben bewegt, so dass die bewegliche Barriere in den geschlossenen Zustand gebracht wird (in Fig. 4a dargestellt).

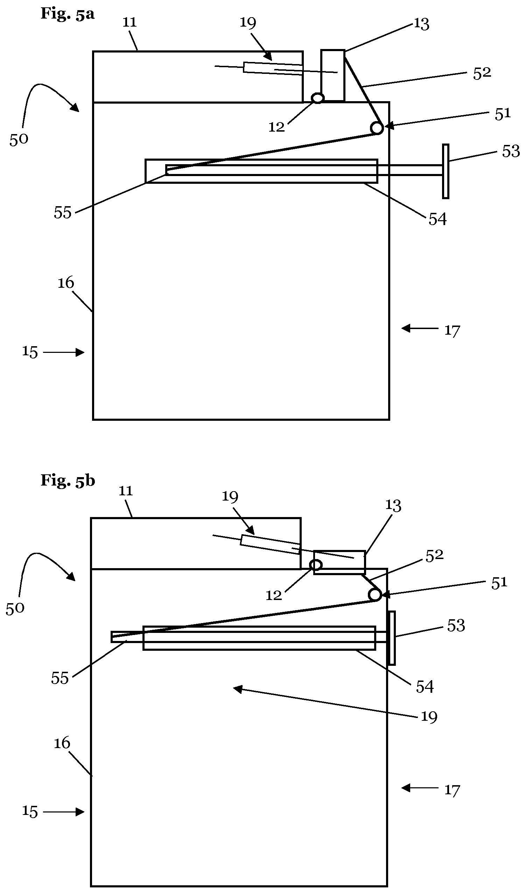

Fig. 5a und 5b zeigen eine Seitenansicht eines weiteren nicht erfindungsgemäßen Beispiels einer Ablage 50. Die Ablage 50 weist eine unbewegliche Barriere 11, eine Vorderseite 17, eine Rückseite 15 und eine Seitenfläche 16 sowie eine bewegliche Barriere 13 mit einer Drehachse 12 auf, ähnlich wie mit Bezug auf Fig. 1a, 1b, 2a, 2b, 3a, 3b, 4a, 4b erläutert.

An der Vorderseite 17 der Ablage 50 ist eine Einrichtung zum Detektieren einer Aufsichtsperson angeordnet, die ein horizontal bewegliches Detektorelement 53 aufweist. Das horizontale bewegliche Detektorelement 53 erstreckt sich in horizontaler Richtung über einen wesentlichen Teil der Vorderseite 17, so dass die Aufsichtsperson beim Zugriff auf die Vorderseite 17 das bewegliche Detektorelement 53 automatisch auf die Ablage 50 zubewegt. Das bewegliche Detektorelement 53 kann z.B. eine Platte oder ein Brett aufweisen, das sich in horizontaler Richtung über die gesamte Breite der Vorderseite 17 erstreckt oder zumindest über einen mittleren Bereich der Vorderseite 17, der zumindest 50% oder zumindest 75 % der Breite Vorderseite 17 umfasst. Das bewegliche Detektorelement 53 kann eine Höhe von mindestens 5 cm, bevorzugt mindestens 10 cm aufweisen, so dass die Aufsichtsperson das Bewegen des Detektorelements 53 nicht als unangenehm empfindet. Die Höhe kann über die gesamte Breite des Detektorelements 53 im Wesentlichen konstant sein.

Die Ablage 50 ist so ausgestaltet, dass die Bewegung des Detektorelements 53 auf die Ablage 50 zu die bewegliche Barriere 13 in den geöffneten Zustand bringt. Das Detektorelement 53 kann hierzu ein Verlängerungselement 55 aufweisen, das sich entlang eines Führungselements 54 der Ablage 50 bewegt. Das Verlängerungselement 55 kann im Wesentlichen horizontal und/oder im Wesentlichen senkrecht zur Vorderseite der Ablage 50 angeordnet sein. Das Führungselement 54 ist im Wesentlichen parallel zum Verlängerungselement 55 angeordnet und kann z.B. als Schiene ausgebildet sein. Das Verlängerungselement 55 und das Führungselement 54 können zumindest teilweise innerhalb der Ablage 50 angeordnet sein. Das Führungselement 54 kann z.B. an einer Seitenfläche 16 der Ablage 50 angeordnet sein. Insbesondere kann auch ein beiden lateralen Seiten der Ablage 50 ein Verlängerungselement 55 und ein entsprechendes Führungselement 54 angeordnet sein. Es ist aber auch möglich, diese beiden Elemente lediglich einmal vorzusehen, z.B. an einer lateralen Seite, oder (von der Vorderseite 17 aus gesehen) mittig durch die Ablage 50 verlaufend.

Am Verlängerungselement 55 kann ein Verbindungselement angeordnet sein, so dass die bewegliche Barriere 13 durch die Bewegung des beweglichen Detektorelements 53 auf die Ablage 50 zu in den geöffneten Zustand gebracht wird. Hierfür ist grundsätzlich ein starres Verbindungselement einsetzbar, wie in Bezug auf Fig. 1a, 1b, 2a, 2b, 3a, 3b, 4a, 4b beschrieben. In einem nicht erfindungsgemäßen Beispiel gemäß Fig. 5a ist jedoch ein lediglich eine Zugkraft übermittelndes Zugelement 52, z.B. eine Schnur oder eine Kette, vorgesehen. Das Zugelement 52 ist mit der beweglichen Barriere 13 verbunden, wobei das Zugelement 52 durch eine Umlenkrolle 51 umgelenkt wird. Durch Bewegung des beweglichen Detektorelements 53 auf die Ablage 50 zu wird die bewegliche Barriere 13 vom Zugelement 52 in den geöffneten Zustand gezogen (in Fig. 5b dargestellt). Die Umlenkrolle 51 sorgt dafür, dass der Vektor der eingebrachten Kraft des beweglichen Detektorelements 53 in die richtige Richtung gelenkt wird.

Die Ablage 50 weist eine Rückstelleinrichtung 19 auf, die ähnlich wie mit Bezug auf die Fig. 1a, 1b, 2a, 2b, 3a, 3b, 4a, 4b beschrieben ausgestaltet sein kann. Wenn die Aufsichtsperson die Ablage 50 verlässt, wird die bewegliche Barriere 13 durch die Rückstelleinrichtung 19 wieder in den geschlossenen Zustand bewegt (in Fig. 5a dargestellt), da die Zugwirkung durch das Zugelement 52 dann wegfällt. Die Rückstelleinrichtung ist einerseits mit dem beweglichen Element der beweglichen Barriere 13 und andererseits mit der unbeweglichen Barriere 11 der Ablage 50 verbunden. Alternativ könnte die Rückstelleinrichtung auch mit einem anderen Element der Ablage 50, z.B. einer Seitenwand 16 verbunden sein. Durch die Bewegung der beweglichen Barriere 13 zurück in den geschlossenen Zustand wird auch das bewegliche Detektorelement 53 wieder von der Ablage 50 wegbewegt. Alternativ oder zusätzlich ist es auch möglich, die Drehachse 12 als Rückstelleinrichtung einzurichten, z.B. indem ein vorgespanntes Scharnier verwendet wird, das die bewegliche Barriere bei Wegfall der Zugkraft durch das Zugelement 52 in den geschlossenen Zustand zurückrotiert. Es können auch weitere Rückstelleinrichtungen, wie in Bezug auf die Fig. 1a, 1b, 2a, 2b, 3a, 3b, 4a, 4b erläutert vorgesehen sein. Zum Beispiel kann eine weitere Rückstelleinrichtung einerseits mit der Ablage 50, z.B. der Seitenwand 16 der Ablage 50 verbunden sein. Andererseits kann die weitere Rückstelleinrichtung mit dem Verlängerungselement 55, dem beweglichen Detektorelement 53 und/oder dem Zugelement 52 verbunden sein, um deren Rückbewegung zu unterstützen.

In anderen nicht erfindungsgemäßen Beispielen können das Zugelement 52 und die Umlenkrolle 51 das bewegliche Element der beweglichen Barriere 13 auch nach unten ziehen, so dass das bewegliche Element wie in Fig. 4a und 4b dargestellt durch Absenken in den geöffneten Zustand gebracht werden kann. Hierzu kann auch ein Führungselement 41 vorgesehen sein, wie in Bezug auf Fig. 4a und 4b erläutert.

Das Führungselement 54, das Verlängerungselement 55, das Zugelement 52 und/oder die Umlenkrolle 51 können zumindest teilweise innerhalb der Ablage 50 angeordnet sein.

## Patentansprüche

1. Ablage (10, 20, 30, 40) mit einer Oberfläche zum Wickeln eines Säuglings oder Kleinkinds. aufweisend:
a. eine bewegliche Barriere (13), die an der Oberfläche der Ablage (10, 20, 30, 40) angeordnet ist, um ein Herabfallen des Säuglings oder Kleinkinds von der Oberfläche zu verhindern;
b. eine Einrichtung zum automatischen Detektieren einer Aufsichtsperson;
c. wobei die Einrichtung zum automatischen Detektieren so ausgestaltet ist, dass sie die bewegliche Barriere (13) in einen geöffneten Zustand bringt, wenn die Einrichtung zum Detektieren eine Aufsichtsperson detektiert;
d. wobei die Einrichtung zum automatischen Detektieren ein Gewicht der Aufsichtsperson detektiert;
e. wobei die Einrichtung zum automatischen Detektieren eine Fläche (18) aufweist, die dazu ausgestaltet ist, die Aufsichtsperson aufzunehmen;
f. wobei die Ablage (10, 20, 30, 40) eine Sperrvorrichtung (21, 22, 23) aufweist, die so ausgestaltet ist, dass die bewegliche Barriere (13) nicht durch direkte Krafteinwirkung auf die bewegliche Barriere (13) in den geöffneten Zustand bewegbar ist;
g. **dadurch gekennzeichnet, dass** sich die Fläche (18) im Wesentlichen entlang einer vollständigen Breite einer Vorderseite (17) der Ablage (10, 20, 30, 40) erstreckt, wobei die Fläche (18) so ausgebildet ist, dass die Aufsichtsperson zum Zugriff auf die Ablage (10, 20, 30, 40) die Fläche (18) betreten muss; und
h. wobei die Einrichtung zum Detektieren konfiguriert ist, eine Präsenz einer Aufsichtsperson mit einem Körpergewicht über einem Schwellwert > 30 kg zu detektieren.

2. Ablage nach Anspruch 1, wobei die Einrichtung zum Detektieren weiterhin so ausgestaltet ist, dass sie die bewegliche Barriere in einen geschlossenen Zustand bringt, wenn die Einrichtung zum Detektieren keine Aufsichtsperson detektiert.

3. Ablage nach Anspruch 1 oder 2, wobei die Sperrvorrichtung in eine erste Bewegungsrichtung bewegbar ist und in eine zweite Bewegungsrichtung sperrt.

4. Ablage nach Anspruch 3, wobei die Ablage so ausgestaltet ist, dass eine direkte Krafteinwirkung auf die bewegliche Barriere eine Bewegung der Sperrvorrichtung in die zweite Bewegungsrichtung impliziert.

5. Ablage nach einem der Ansprüche 1-4, wobei die Ablage so ausgestaltet ist, dass die Sperrvorrichtung aktiviert wird, wenn die Einrichtung zum Detektieren keine Aufsichtsperson detektiert.

6. Ablage nach einem der Ansprüche 1-5, wobei die Ablage eine für einen Zugriff durch eine Aufsichtsperson vorgesehene Vorderseite aufweist, wobei die bewegliche Barriere zumindest an der Vorderseite angeordnet ist.

7. Ablage nach einem der Ansprüche 1-6, wobei die bewegliche Barriere zumindest ein bewegliches Element aufweist, das drehbar ist.

8. Ablage nach einem der Ansprüche 1-7, wobei die bewegliche Barriere zumindest ein bewegliches Element aufweist, das unter eine Oberfläche der Ablage absenkbar ist.

9. Ablage nach einem der Ansprüche 1-8, wobei die Ablage zumindest eine Schublade (32) und eine Einrichtung zum Verriegeln (31, 33) der zumindest einen Schublade aufweist, wobei die Einrichtung zum Verriegeln so ausgebildet ist, dass sie aktiviert wird, wenn die Einrichtung zum Detektieren eine Aufsichtsperson detektiert.

## Claims

1. A tray (10, 20, 30, 40) with a surface for wrapping a baby or an infant, comprising:
a. a movable barrier (13) arranged at the surface of the tray (10, 20, 30, 40) for preventing the baby or infant from falling off the surface;
b. an equipment for automatically detecting a supervisor;
c. wherein the equipment for automatically detecting is configured to bring the movable barrier (13) into an opened state when the equipment for detecting detects a supervisor;
d. wherein the equipment for automatically detecting detects a weight of the supervisor;
e. wherein the equipment for automatically detecting comprises a surface (18) configured to receive the supervisor;
f. wherein the tray (10, 20, 30, 40) comprises a locking device (21, 22, 23) configured such that the movable barrier (13) is not movable into the opened state by direct force on the movable barrier (13);
g. **characterized in that** the surface (18) extends substantially along an entire width of a front side (17) of the tray (10, 20, 30, 40), wherein the surface (18) is configured such that the supervisor has to enter the surface (18) to access the tray (10, 20, 30, 40); and
h. wherein the equipment for detecting is configured to detect a presence of a supervisor having a body weight above a threshold value > 30 kg.

2. The tray according to claim 1, wherein the equipment for detecting is further configured to bring the movable barrier into a closed state when the equipment for detecting does not detect a supervisor.

3. The tray according to claim 1 or 2, wherein the locking device is movable in a first movement direction and locks in a second movement direction.

4. The tray according to claim 3, wherein the tray is configured such that direct force on the movable barrier implies movement of the locking device in the second movement direction.

5. The tray according to any one of claims 1-4, wherein the tray is configured such that the locking device is activated when the equipment for detecting does not detect a supervisor.

6. The tray according to any one of claims 1-5, wherein the tray comprises a front side for access by a supervisor, wherein the movable barrier is arranged at least at the front side.

7. The tray according to any one of claims 1-6, wherein the movable barrier comprises at least one movable element which is rotatable.

8. The tray according to any one of claims 1-7, wherein the movable barrier comprises at least one movable element which is lowerable below a surface of the tray.

9. The tray according to any one of claims 1-8, wherein the tray comprises at least one drawer (32) and an equipment for locking (31, 33) the at least one drawer, wherein the equipment for locking is configured such that it is activated when the equipment for detecting detects a supervisor.

## Revendications

1. Plateau (10, 20, 30, 40) avec une surface supérieure pour changer un nourrisson ou un enfant en bas âge, comportant :
a. une barrière mobile (13) disposée sur la surface supérieure du plateau (10, 20, 30, 40) pour empêcher le nourrisson ou l'enfant en bas âge de tomber de la surface supérieure ;
b. un dispositif de détection automatique d'un préposé ;
c. dans lequel le dispositif de détection automatique est configuré pour amener la barrière mobile (13) dans un état ouvert lorsque le dispositif de détection détecte un préposé ;
d. dans lequel le dispositif de détection automatique détecte un poids du préposé ;
e. dans lequel le dispositif de détection automatique comporte une surface (18) configurée pour recevoir le préposé ;
f. dans lequel le plateau (10, 20, 30, 40) comporte un dispositif de blocage (21, 22, 23) configuré pour que la barrière mobile (13) ne puisse pas se déplacer à l'état ouvert sous l'action directe d'une force sur la barrière mobile (13) ;
g. **caractérisé en ce que** la surface (18) s'étend sensiblement le long d'une largeur complète d'une face avant (17) du plateau (10, 20, 30, 40), la surface (18) étant conçue pour nécessiter que le préposé vienne sur la surface (18) pour accéder au plateau (10, 20, 30, 40) ; et
h. dans lequel le dispositif est configuré pour détecter une présence d'un préposé avec un poids corporel supérieur à un seuil > 30 kg.

2. Plateau selon la revendication 1, dans lequel le dispositif de détection est en outre configuré pour amener la barrière mobile dans un état fermé lorsque le dispositif de détection ne détecte pas de préposé.

3. Plateau selon la revendication 1 ou 2, dans lequel le dispositif de blocage est mobile dans une première direction de mouvement et bloquant dans une deuxième direction de mouvement.

4. Plateau selon la revendication 3, dans lequel le plateau est configuré de sorte qu'une action directe d'une force sur la barrière mobile engendre un mouvement du dispositif de blocage dans la deuxième direction de mouvement.

5. Plateau selon l'une des revendications 1 à 4, dans lequel le plateau est configuré pour activer le dispositif de blocage lorsque le dispositif de détection ne détecte pas de préposé.

6. Plateau selon l'une des revendications 1 à 5, dans lequel le plateau comporte une face avant prévue pour l'accès par un préposé, la barrière mobile étant disposée au moins sur la face avant.

7. Plateau selon l'une des revendications 1 à 6, dans lequel la barrière mobile comporte au moins un élément mobile qui est pivotant.

8. Plateau selon l'une des revendications 1 à 7, dans lequel la barrière mobile comporte au moins un élément mobile abaissable sous une surface supérieure du plateau.

9. Plateau selon l'une des revendications 1 à 8,
dans lequel le plateau comporte au moins un tiroir (32) et un dispositif de verrouillage (31, 33) de l'au moins un tiroir, le dispositif de verrouillage étant conçu pour être activé lorsque le dispositif de détection détecte un préposé.
